# EUROPÄISCHE PATENTSCHRIFT

(11) **EP 2 461 078 B1**
(45) Veröffentlichungstag und Bekanntmachung des Hinweises auf die Patenterteilung: **23.10.2013**
(21) Anmeldenummer: 12157738.1
(22) Anmeldetag: 30.05.2007
(51) Int. Cl.: F16L 3/12, F16L 3/10

(54) **Klammerelement zum Halten zumindest eines Gegenstands, insbesondere eines Kabels**
CLAMPING ELEMENT FOR HOLDING AT LEAST ONE OBJECT, IN PARTICULAR A CABLE
AGRAFE PERMETTANT DE MAINTENIR AU MOINS UN OBJET, EN PARTICULIER UN CÂBLE

(30) Priorität: 06.06.2006 DE 102006026250
(43) Veröffentlichungstag der Anmeldung: 06.06.2012
(62) Teilanmeldung aus: 07729640.8
(73) Patentinhaber: BSH Bosch und Siemens Hausgeräte GmbH, 81739 München (DE)
(72) Erfinder: Dietrich, Mike, 15848 Bornow (DE); Wandt, Peter, 13469 Berlin (DE); Zschage, Hans-Joachim, 16547 Birkenwerder (DE)

(56) Entgegenhaltungen:
- DE-U1- 9 405 363
- DE-U1- 9 407 618
- DE-U1- 29 618 513
- GB-A- 2 142 376
- GB-A- 2 202 270

## Beschreibung

Die Erfindung betrifft ein Klammerelement zum Halten zumindest eines Gegenstands, insbesondere eines Kabels, mit einem ersten und einem zweiten Teil, wobei die beiden Teile zum Verschließen des Klammerelements relativ zueinander bewegbar sind, und einem elastischen Element, welches an dem ersten oder dem zweiten Teil angeordnet ist, und mit den weiteren Merkmalen des Oberbegriffs des Anspruchs.

Klammerelemente zum Halten von Kabeln oder Rohren sind in vielfältiger Ausgestaltung bekannt. Aus der deutschen Offenlegungsschrift DE 36 35 408 A1 ist eine Klammer zum Festhalten von Flachkabeln bekannt, welche ein Unterteil umfasst, an welchem ein Rastelement zum Befestigen der Klammer an einem sonstigen Objekt, wie beispielsweise einer Wand, oder einem Blechteil vorgesehen ist. Das Unterteil ist über ein Filmscharnier mit einem Oberteil verbunden, wodurch die beiden Teile zum Verschließen der Klammer relativ zueinander bewegbar sind und über eine Rastvorrichtung mit einem Rasthaken und einem Rastbügel geöffnet und geschlossen werden können. An dem Oberteil sind zwei elastische Elemente angeordnet, welche jeweils ein in Richtung des Unterteils weisendes freiliegendes Ende aufweisen. Beim Anbringen von Flachkabeln auf das Unterteil und dem nachfolgenden Schließen des Oberteils liegen diese elastischen Elemente an den Flachkabeln an und werden durch den Schließvorgang ineinander greifend verformt und auf den Flachkabeln aufdrückend angeordnet.

Des Weiteren ist aus der DE 40 31 237 A1 ein verschließbarer Rohr- oder Kabelhalter aus hartelastischem Kunststoff bekannt, welcher ein halbringförmiges Unterteil und ein an einer Seite daran über ein Filmscharnier befestigtes ebenfalls halbringförmiges Oberteil aufweist. An einer dem Filmscharnier gegenüberliegenden Seite sind das Oberteil und das Unterteil durch eine lösbare Rastvorrichtung verbunden, wodurch der Halter geschlossen und geöffnet werden kann. An dem Oberteil sind mehrere elastische Elemente ausgebildet, welche jeweils freiliegende Enden aufweisen, welche sich beim Einbringen eines Rohres oder eines Kabels elastisch verbiegen und an diese zu haltenden Gegenstände anfügen.

Ein Klammerelement zum Halten von Materialsträngen, wie Kabel, Schläuche und Rohre, mit ersten Teil und einem zum Verschließen des Klammerelements relativ zum ersten Teil bewegbaren zweiten Teil ist aus DE 94 05 363 U1 bekannt. Ein solches Klammerelement weist elastische Elemente auf, die bereichsweise bogenförmig ausgebildet und mit jeweils einem Randbereich an dem ersten bzw. zweiten Teil befestigt sind, wobei die Krümmungsrichtung eines bogenförmigen Bereichs eines dem zu haltenden Materialstrang zugewandten bogenförmigen Bereichs des anderen Teils entspricht. Der gegenüberliegende Randbereich eines elastischen Elements ist mittels Klemmsitz hinter einer Rastkante festlegbar. Der Materialstrang wird im Klammerelement durch eine auf den Materialstrang wirkende Haltekraft haltbar, welche durch die Verformung des elastischen Elements bewirkt wird.

Ein weiteres Klammerelement mit einem bogenförmig ausgebildeten elastischen Element zum Halten eines Gegenstandes offenbart US 5,645,252. Das elastische Element weist mehrere halbrunde Erhebungen auf.

Klammerelemente sind auch in DE 94 07 618 U1, GB 2 202 270 A, US 5,626,316 und WO 83/00272 A1 offenbart.

Diese bekannten Halter sind relativ aufwendig konzipiert und ermöglichen darüber hinaus aufgrund der freiliegenden elastischen Elemente eine unzureichende Halterung für die jeweiligen zu haltenden Gegenstände.

Daher ist es Aufgabe der vorliegenden Erfindung, ein Klammerelement zu schaffen, welches eine verbesserte Halterung zumindest eines Gegenstands ermöglicht.

Diese Aufgabe wird durch ein Klammerelement, welches die Merkmale nach Patentanspruch 1 aufweist, gelöst.

Ein erfindungsgemäßes Klammerelement zum Halten zumindest eines Gegenstands, insbesondere eines Kabels, umfasst einen ersten Teil und einen zum Verschließen des Klammerelements relativ zum ersten Teil bewegbaren zweiten Teil sowie ein elastisches Element, welches an dem ersten oder dem zweiten Teil angeordnet ist. Das elastische Element ist zumindest bereichsweise bogenförmig ausgebildet und mit gegenüberliegenden Randbereichen an einem der beiden Teile befestigt, wobei der Gegenstand zwischen dem elastischen Element und dem anderen Teil, an dem das elastische Element nicht befestigt ist, haltbar ist. Der Gegenstand wird vorteilhaft durch eine auf den Gegenstand einwirkende Haltekraft gehalten, die durch eine von dem Gegenstand verursachte Verformung des elastischen Elements (5) bewirkt ist. Die Richtung der Krümmung des bogenförmigen Bereichs des elastischen Elements ist entsprechend der Richtung der Krümmung des dem zu haltenden Gegenstand zugewandten bogenförmigen Bereichs des anderen Teils und somit desjenigen Teils, an dem das elastische Element nicht angeordnet ist, ausgebildet. Dieses Klammerelement ist relativ einfach ausgebildet und ermöglicht dennoch eine zuverlässige und verbesserte Halterung eines Gegenstands. Durch die mechanisch stabile Befestigung des elastischen Elements kann der Gegenstand stabil in dem Klammerelement und insbesondere zwischen dem elastischen Element und dem Teil, an dem das elastische Element nicht befestigt ist, gehalten werden. Durch die gleichgerichtete Krümmung des elastischen Elements und dieses anderen Teils kann auch ein gleichmäßiges Anliegen und ein gleichmäßiges Einwirken einer Haltekraft auf einen Gegenstand erreicht werden.

Das Klammerelement ist bevorzugt derart ausgebildet, dass sich der bogenförmige Bereich des elastischen Elements über die gesamte Ausdehnung des bogenförmigen Bereichs des Teils erstreckt, an dem das elastische Element nicht angeordnet ist. Insbesondere diese gekrümmten Bereiche dieses elastischen Elements und dem Teil an dem der Gegenstand anliegt, sind somit im Wesentlichen gleichgeformt konzipiert.

Dasjenige Teil, an welchem das elastische Element befestigt ist, weist in bevorzugter Weise zwischen den befestigten Randbereichen einen entgegengesetzt zum elastischen Element gekrümmten bogenförmigen Bereich auf. Das elastische Element und das Teil, an dem das elastische Element befestigt ist, weisen insbesondere in diesen gekrümmten Bereichen dadurch einen größeren Abstand auf, wodurch die Bewegbarkeit und Verformbarkeit des elastischen Elements erhöht werden kann.

Vorzugsweise ist an einer dem elastischen Element zugewandten Seite des Teils, an dem das elastische Element befestigt ist, ein Anschlagelement ausgebildet. Dieses Anschlagelement ist bevorzugt so gestaltet, dass einerseits dieses Teil mechanisch stabilisiert wird und andererseits ein Umschnappen des elastischen Elements und somit in eine gekrümmte Formgebung mit einer Richtung, welche der ursprünglichen Ausgestaltung entgegengesetzt ist, verhindert wird. Die mit der grundlegenden Ausgestaltung des elastischen Elements verbundene ursprüngliche Krümmung kann dadurch aufrecht erhalten werden und die damit verbundene Druckeinwirkung auf den zu haltenden Gegenstand gewährleistet werden, wodurch dieser Gegenstand sicher und fest gehalten werden kann.

Das erste und das zweite Teil sind bevorzugt an einer ersten Seite durch eine Rastvorrichtung lösbar verbindbar, wobei an jedem Teil zumindest ein Rastelement dieser Rastvorrichtung angeordnet ist. Des Weiteren ist das erste und das zweite Teil in vorteilhafter Weise an einer zweiten Seite, welche der ersten Seite gegenüberliegend ausgebildet ist, durch ein Filmscharnier verbunden.

Bevorzugt ist an einem der beiden Teile zumindest ein Befestigungselement angebracht, welches zum Befestigen des gesamten Klammerelements an einem Objekt, wie beispielsweise einem Blechteil oder einer sonstig ausgebildeten Wand, ermöglicht wird.

Das Befestigungselement ist bevorzugt als Rastzapfen ausgebildet. Bevorzugt ist das Befestigungselement zentral an einem Teil angeordnet, wodurch die Verbindung des Klammerelements mit einer Grundplatte oder einer sonstigen Untergrundkontur gewährleistet werden kann. Bevorzugt ist dabei in dieser Grundplatte ein in vielfältiger Weise ausgestaltbarer Öffnungsbereich ausgebildet, durch den das Befestigungselement einführbar ist. Der Öffnungsbereich kann beispielsweise rund oder eckig ausgebildet sein, wobei der eckige Öffnungsbereich zugleich einen Verdrehschutz des Befestigungselements bilden kann. Diese Verbindung des Befestigungselements mit der Grundplatte oder einem sonstigen Objekt kann auch als Rastvorrichtung ausgebildet sein, beispielsweise als Drehverrastung oder Schnappverrastung. Darüber hinaus können jedoch auch eine Schieberastung beispielsweise über eine Dünnblechkante, eine Befestigung mit Kunststoffschrauben oder über eine Haltelasche mit Blechschrauben vorgesehen sein. Ebenso kann jedoch auch eine Ausgestaltung mit zwei komplementär ausgebildeten Verrastelementen vorgesehen sein, oder Blechadapterteile ausgebildet sein, welche sich in Kunststoffrippen verkrallen. Bei relativ geringen Anforderungen an die mechanische Festigkeit können auch Klebepads verwendet werden.

Vorzugsweise ist der bogenförmige Bereich des elastischen Elements mit Stiften ausgebildet, welche bevorzugt parallel zueinander ausgebildet sind. Diese Stifte können äquidistant zueinander oder aber auch mit variierendem Abstand zueinander angeordnet sein. Bevorzugt sind diese Stifte im Haltebereich des Klammerelements im Wesentlichen parallel zum zu haltenden Gegenstand orientiert. Die Stifte sind derartig ausgeführt und am elastischen Element angeordnet, dass der zu haltende Gegenstand auch zumindest einen Stift, der an dem Gegenstand anliegt, verformt, wodurch vorteilhaft die Haltekraft durch die verursachte Verformung zumindest des einen Stiftes erhöht wird. Die Gegenstände können auch in gebündelter Form in das Klammerelement eingelegt werden. In einem solchen Fall umschlingen die Stifte zumindest teilweise das Bündel der zu haltenden Gegenstände, wodurch die Stifte die Haltekraft auf das gesamte Bündel optimal verteilen. Durch die Ausgestaltung des elastischen Elements mit daran angeordneten Stiften kann das Halten des Gegenstands und die positionsgenaue Anordnung verbessert werden. Insbesondere dann, wenn mehrere zu haltende Gegenstände mit gleichen oder aber auch unterschiedlichen Größen, insbesondere Durchmessern gehalten werden sollen, kann dabei durch die Anordnung dieser Stifte diese Halterung optimiert werden. Die Stifte können mit unterschiedlichen Längen und/oder unterschiedlichen Durchmessern ausgebildet werden. Vorzugsweise sind die Stifte rund ausgeführt, sie können auch eine halbrunde oder mehreckige Form aufweisen.

Es kann auch vorgesehen sein, dass am bogenförmigen Bereich des dem elastischen Element gegenüberliegenden Teils und somit an dem Teil, an dem das elastische Element nicht befestigt ist, ein Steg ausgebildet ist. Dieser Steg ist bevorzugt durchgängig ausgebildet und erstreckt sich entlang der Krümmung im Wesentlichen über die gesamte Ausdehnung des bogenförmigen Bereichs dieses Teils. Durch diesen Steg kann die Fixierung des zu haltenden Gegenstands nochmals verbessert werden.

In bevorzugter Weise ist das Klammerelement zum Halten von zumindest zwei nebeneinander angeordneten Gegenständen ausgebildet. Auf alle diese Gegenstände kann somit eine im Wesentlichen gleichmäßig wirkende Haltevorrichtung geschaffen werden, wodurch diese stabil positioniert und befestigt werden können. Das Klammerelement ist zugleich auch geeignet zum Halten von Gegenständen, die in einem Bündel angeordnet sind, da sich das elastische Element durch Verformung an ein solches Bündel anpasst.

In vorteilhafter Weise ist das Klammerelement einstückig ausgebildet und bevorzugt aus Kunststoff hergestellt. Es kann dabei vorgesehen sein, dass das Klammerelement als Spitzgussteil gefertigt ist. Dadurch kann eine relativ kostengünstige und aufwandsarme Herstellung gewährleistet werden. Durch die einstückige Ausgestaltung kann eine einfache Handhabung ermöglicht werden, da kein umständliches Hantieren mit mehreren Teilen zum Befestigen des Gegenstands erforderlich ist. Des Weiteren ist im Allgemeinen kein zusätzlicher Werkzeugeinsatz erforderlich, um die bevorzugt mit Rastvorrichtungen ausgestalteten Klammerelemente zu befestigen und darüber hinaus die Gegenstände in das Klammerelement einzubringen. Nicht zuletzt dadurch kann somit auch eine Senkung der Montagekosten und auch der Materialkosten ermöglicht werden. Insbesondere kann mit dem Klammerelement das Halten von Leitungen ermöglicht werden, welche auch verschiedene Größen, insbesondere im Durchmesser, aufweisen, wodurch das Klammerelement auch als multifunktional bezeichnet werden kann. Neben dem Klemmen von im Querschnitt runden Gegenständen, insbesondere Kabeln, kann auch ein Halten von Flachbandkabeln ermöglicht werden.

Durch die vorgesehene Rastvorrichtung zum Verbinden des ersten und des zweiten Teils kann auch ein einfaches Öffnen und Schließen zum Austausch und Nachlegen von Gegenständen aus oder in das Klammerelement gewährleistet werden. Insbesondere der Kundendienst kann dadurch im Zeitaufwand reduziert werden.

Durch die bevorzugten Ausgestaltungen des elastischen Elements und/oder das Anbringen des Stegs an dem Teil, an welchem das elastische Element nicht angeordnet ist, kann ein Verrutschen des zu haltenden Gegenstands verhindert werden, so dass eine sehr sichere und passgenaue Montage gewährleistet werden kann. Besonders vorteilhaft ist dies bei Ausgestaltungen, bei denen eine sehr hohe Lagefixierung erforderlich ist. Durch die erfindungsgemäße Anordnung und Ausgestaltung des elastischen Elements kann sich das Klammerelement mit stets hoher Haltekraft im eingelegten Leitungsbündel voll automatisch anpassen. Der Einsatz des Klammerelements kann je nach Eignung des Materials und der zu klemmenden Leitungen im Allgemeinen unter allen Umgebungsbedingungen und über einen großen Temperaturbereich gewährleistet werden.

Prinzipiell kann das Klammerelement an allen Stellen eingesetzt werden, an denen das Führen und Klemmen von Gegenständen, insbesondere Kabeln, erforderlich ist. So kann dabei eine Verwendung im Automobiltechnikbereich, in der Raumfahrttechnik, in der Luftfahrttechnik, in der Computertechnik, in der Installationstechnik aber auch in der Hausgerätetechnik verwendet werden. Insbesondere in der Hausgerätetechnik kann das Klammerelement in bestehenden Verlegevorrichtungen verwendet werden, wobei da wiederum variable Ausgestaltungen in vielfältiger Weise möglich sind. Insbesondere in der Hausgerätetechnik kann dadurch ein Klammerelement bereitgestellt werden, welches bevorzugt im nicht schwingenden Maschinenbereich in Waschgeräten oder Wäschetrockner oder anderen Hausgeräten eingesetzt werden kann. Prinzipiell kann jedoch auch der Einsatz im Bereich von schwingenden Maschinenbereichen vorgesehen sein. Gegebenenfalls sind hier entsprechende Verstärkungen oder individuelle Anbringungen vorzusehen.

Ausführungsbeispiele der Erfindung werden nachfolgend anhand schematischer Zeichnungen näher erläutert. Es zeigen:
- Fig. 1: eine Schnittdarstellung durch ein erstes Ausführungsbeispiel eines erfindungsgemäßen Klammerelements in einem geöffneten Zustand;
- Fig. 2: eine perspektivische Darstellung des Klammerelements gemäß Fig. 1;
- Fig. 3: eine Schnittdarstellung eines erfindungsgemäßen Klammerelements in einem geschlossenen Zustand gemäß einem zweiten Ausführungsbeispiel; und
- Fig. 4: eine perspektivische Darstellung des Klammerelements gemäß Fig. 3.

In den Figuren werden gleiche oder funktionsgleiche Elemente mit den gleichen Bezugszeichen versehen.

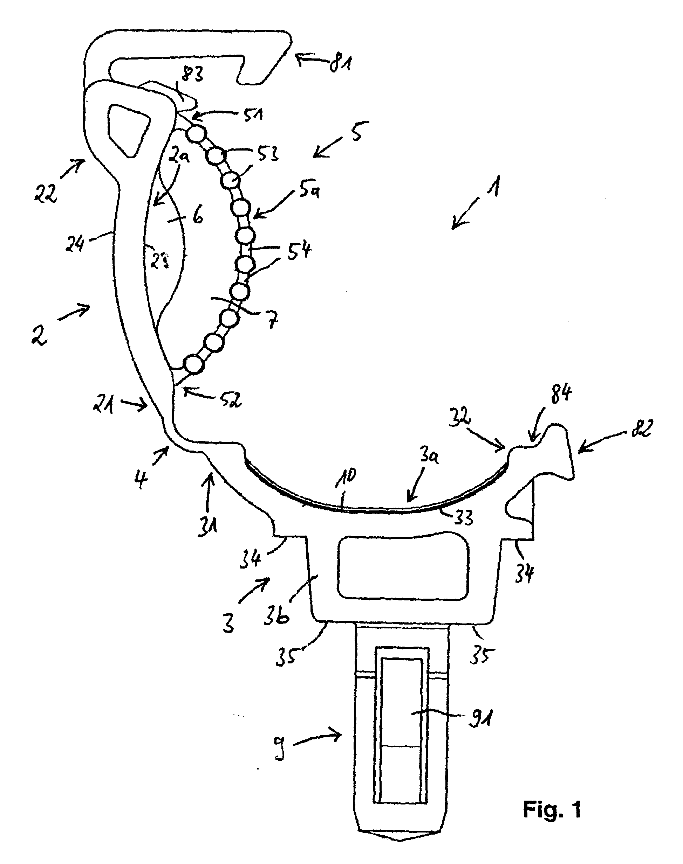

Fig. 1 zeigt eine Schnittdarstellung eines Ausführungsbeispiels eines Klammerelements 1 in einem geöffneten Zustand. Das Klammerelement 1 ist aus Kunststoff einstückig ausgebildet. Das Klammerelement 1 ist zum Halten von mehreren nebeneinander angeordneten, nicht dargestellten Kabeln konzipiert und umfasst ein als Oberteil 2 ausgebildetes erstes Teil sowie ein als Unterteil 3 ausgebildetes zweites Teil. Das Oberteil 2 ist an einer ersten Seite 21 über ein Filmscharnier 4 mit einer ersten Seite 31 des Unterteils 3 unlösbar verbunden.

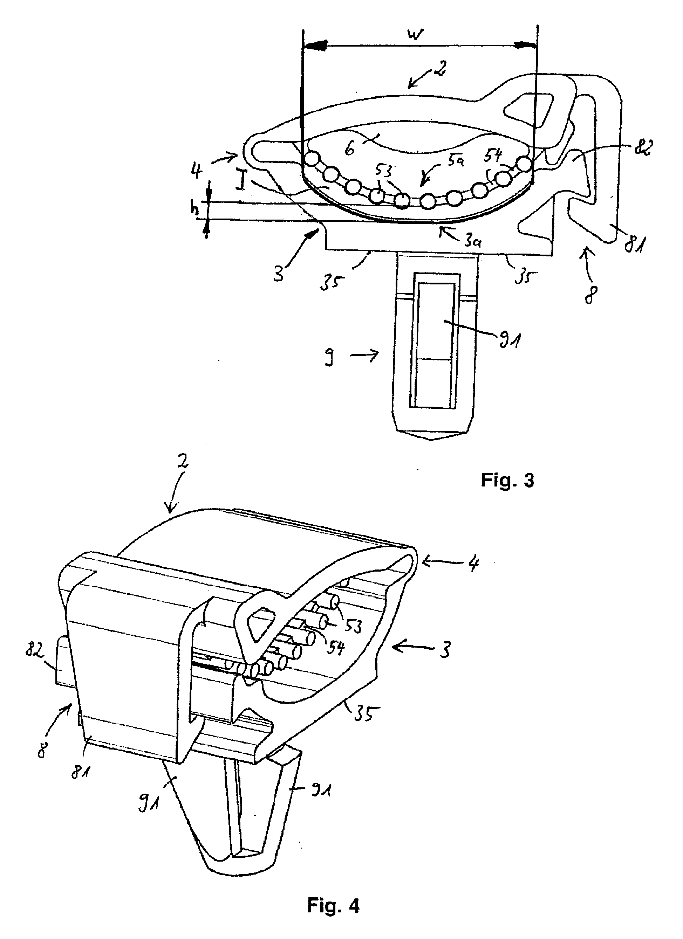

Darüber hinaus ist das Oberteil 2 im Wesentlichen über seine gesamte Länge gekrümmt ausgebildet und umfasst einen bogenförmigen Bereich 2a. An einem vorderen freien Ende 22 des Oberteils 2 sind ein Rasthaken 81 einer Rastvorrichtung 8 (Fig. 3) sowie ein Anschlagelement 83 ausgebildet.

Im Ausführungsbeispiel ist ein elastisches Element 5 an dem Oberteil 2 unlösbar befestigt, wobei das elastische Element 5 dazu mit gegenüberliegenden Randbereichen 51 und 52 an dem Oberteil 2 angeordnet ist. Das elastische Element 5 weist einen bogenförmigen Bereich 5a auf, welcher sich im Ausführungsbeispiel im Wesentlichen über die gesamte Länge des elastischen Elements 5 erstreckt. Das elastische Element 5 ist in der gezeigten Ausführung somit praktisch vollständig durch den bogenförmigen Bereich 5a definiert.

Das elastische Element 5 und somit auch der bogenförmige Bereich 5a umfasst eine Mehrzahl an stabförmigen Elementen bzw. Stiften 53, welche im Ausführungsbeispiel im Wesentlichen den gleichen Durchmesser und die gleiche Länge aufweisen. Wie zu erkennen ist, sind die Stifte 53 im Wesentlichen parallel zueinander orientiert und ihre Längsachsen verlaufen senkrecht zur Figurenebene.

Darüber hinaus sind die Stifte 53 äquidistant zueinander angeordnet, wobei zwischen zwei Stiften 53 jeweils ein Distanzelement 54 ausgebildet ist. Die Distanzelemente 54 sind in der gezeigten Schnittdarstellung in ihrer Dicke kleiner ausgebildet als die Durchmesser der Stifte 53. Zwei benachbarte Stifte 53 und das zwischen diesen Stiften 53 angeordnete Distanzelement 54 können somit einen zu haltenden Gegenstand, insbesondere ein dünnes Kabel, zumindest teilweise umschlingen. Die Stifte 53 und die Distanzelemente 54 sind im Klammerelement derartig angeordnet, dass bei einem geschlossenem Klammerelement 1 das zu haltende Kabel (nicht dargestellt) zumindest das anliegende Distanzelement 54 und zumindest einen der anliegenden Stifte 53 elastisch verformt, wodurch die zum Halten des Kabels erforderliche Haltekraft bewirkt wird. Dadurch kann ein optimales Halten von relativ kleinen und dünnen Kabeln ermöglicht werden, welche sich in einem Zwischenraum zwischen zwei Stiften 53 einlegen können und dadurch durch diese Stifte 53 am Verrutschen in seitlicher Richtung gehindert werden.

An einer dem elastischen Element 5 zugewandten Seite 23 des bogenförmigen Bereichs 2a ist ein Anschlagelement 6 ausgebildet, welches eine wellenförmige Struktur zeigt. Die Ausgestaltung dieses Anschlagelements 6 ist so dimensioniert, dass das elastische Element maximal eine Verformung bis zum Anschlagelement 6 durchführen kann. Die Ausgestaltung ist dabei derart konzipiert, dass beim Anlegen des elastischen Elements 5 an das Anschlagelement 6 kein Umschnappen des bogenförmigen Bereichs 5a in eine entgegengesetzt orientierte Krümmungsrichtung und somit einer dem bogenförmigen Bereich 2a entsprechenden Krümmungsrichtung erfolgen kann. Dadurch kann stets ein durch die dargestellte Krümmungsrichtung des bogenförmigen Bereichs 5a des elastischen Elements 5 bewirkender Haltedruck auf einen mit dem Klammerelement 1 zu haltenden Gegenstand ausgeübt werden.

Zur elastischen Verformung des elastischen Elements 5 ist zwischen dem bogenförmigen Bereich 5a und dem Anschlagelement 6 sowie dem Oberteil 2 ein Freiraum 7 ausgebildet.

Das Unterteil 3 weist ein einer ersten Seite 31 gegenüberliegendes freies Ende 32 auf, an dem ein Rastbolzen 82 angebracht ist, in den der Rasthaken 81 zum Verschließen des Klammerelements 1 eingreifen kann. Darüber hinaus ist eine Anschlagnut 84 ausgebildet, an welcher das Anschlagelement 83 im geschlossenen Zustand des Klammerelements 1 anliegen kann.

Das Unterteil 3 weist ebenfalls einen bogenförmigen Bereich 3a auf, dessen Krümmungsrichtung der Krümmungsrichtung des elastischen Elements 5 und insbesondere des bogenförmigen Bereichs 5a entspricht. Die auf eine Innenseite 33 des bogenförmigen Bereichs 3a aufgelegten Kabel (nicht dargestellt) können somit in optimaler Weise zwischen diesem bogenförmigen Bereich 3a und dem bogenförmigen Bereich 5a des elastischen Elements 5 gehalten werden. Wie zu erkennen ist, erstreckt sich der bogenförmige Bereich 3a in seinen Ausmaßen und seiner Krümmungsgestaltung im Wesentlichen analog zu den Ausmaßen und der Krümmungsgestaltung des bogenförmigen Bereichs 5a.

An einer diesem bogenförmigen Bereich 3a abgewandten Seite sind im Wesentlichen planar ausgebildete Auflageflächen 34 ausgebildet, mit welchen das Klammerelement 1 an einem zu befestigenden Objekt, beispielsweise einer Grundplatte oder dergleichen, aufliegen kann.

Zur Befestigung des Klammerelements 1 an derartigen Objekten ist an dem Unterteil 3 ein Sockel 3b ausgebildet, welcher in eine entsprechend ausgebildete Öffnung eines Objekts, an dem das Klammerelement 1 befestigt werden soll, einführbar ist.

An einer Unterseite 35 des Sockels 3b ist ein Befestigungselement 9 angeordnet, welches im Ausführungsbeispiel einen Rastzapfen darstellt. Dieser Rastzapfen umfasst Rasthaken 91 zum Verrasten des Klammerelements 1 an dem Objekt.

Im Ausführungsbeispiel ist das elastische Element 5 an dem Oberteil 2 über die beiden Randbereiche 51 und 52 befestigt. Es kann auch vorgesehen sein, dass das elastische Element 5 an dem Unterteil 3 in entsprechender Weise mit den Randbereichen 51 und 52 unlösbar befestigt ist. Bei einer derartigen Ausführung würde der bogenförmige Bereich 5a dieses elastischen Elements 5 mit einer entgegengesetzt zum bogenförmigen Bereich 3a ausgebildeten Krümmungsrichtung ausgestaltet sein. In entsprechender Weise würde dann das Anschlagelement 6 an der Innenseite 33 angebracht sein. Bei dieser alternativen Ausführung würde dann das Anschlagelement 6 an der gezeigten Position am bogenförmigen Bereich 2a des Oberteils 2 nicht ausgebildet sein und Gegenstände, insbesondere Kabel, würden dann zwischen dem elastischen Element 5, insbesondere dem bogenförmigen Bereich 5a und dem bogenförmigen Bereich 2a des Oberteils 2 gehalten werden.

Das gezeigte Klammerelement 1 kann in jeder beliebigen Orientierung angeordnet werden.

Zur weiteren Stabilisierung des Oberteils 2 kann auch an einer Außenseite 24 ein weiteres Versteifungselement (nicht dargestellt) angebracht sein, durch welches das Oberteil 2 weiter mechanisch stabilisiert werden kann.

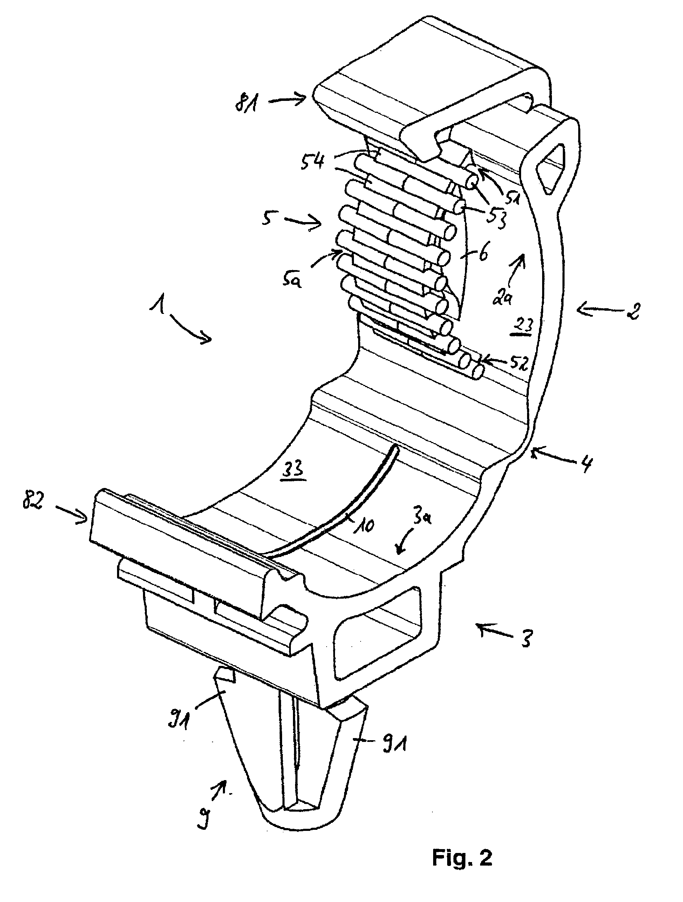

In Fig. 2 ist eine perspektivische Darstellung des in geöffneter Stellung gezeigten Klammerelements 1 gemäß Fig. 1 dargestellt. Der in Fig. 1 lediglich schematisch gezeichnete Steg 10 ist in Fig. 2 hinsichtlich seiner Anordnung und seines Verlaufs gezeigt. Im Ausführungsbeispiel ist dieser Steg 10 durchgängig ausgebildet und erstreckt sich über die gesamte Ausdehnung des bogenförmigen Bereichs 3a. Ein Verrutschen der Kabel in Längsrichtung und somit auch in Längsrichtung der Stifte 53 kann dadurch verhindert werden.

In Fig. 3 ist eine Schnittdarstellung eines zweiten Ausführungsbeispiels eines Klammerelements 1 in einem geschlossenen Zustand gezeigt. Es ist dabei zu erkennen, dass der Rasthaken 81 den Rastbolzen 82 umgreift und dadurch das Oberteil 2 und das Unterteil 3 zusammenhält. Darüber hinaus ist die Anordnung des bogenförmigen Bereichs 5a zum bogenförmigen Bereich 3a in dieser geschlossenen Stellung des Klammerelements 1 zu erkennen. In einem Haltebereich 1 sind in dieser geschlossenen Stellung die nicht dargestellten Kabel angeordnet. Diese sind dann bevorzugt entlang der Innenseite 31 nebeneinander angeordnet und durch die Elemente gehalten.

Im Unterschied zur Ausgestaltung gemäß den Fig. 1 und 2 weist das Unterteil 3 keinen Sockel 3b auf, sondern zeigt einen vergrößerten planaren Auflagebereich 35 zur Auflage an ein Objekt, an dem das Klammerelement 1 befestigt werden soll.

In Fig. 4 ist eine perspektivische Darstellung des Klammerelements 1 gemäß Fig. 3 gezeigt.

Im vorliegenden Ausführungsbeispiel weist das Klammerelement 1, wie in Fig. 3 gezeigt, eine lichte Weite w des Haltebereichs I im Bereich von 12,5 bis 13,5 mm, vorzugsweise 13,2 mm auf. Der Radius des bogenförmigen Bereichs 5a des elastischen Elements 5 beträgt vorzugsweise 8,65 mm, dessen Distanzelemente 54 eine Dicke von 0,5 mm und dessen Stifte 53 einen Durchmesser von 1 mm aufweisen. Der nominelle Abstand h zwischen der Seite 33 des Teils 3, an dem das elastische Element 5 nicht befestigt ist, und der der Seite 33 zugewandten Seite eines Distanzelements 54 ist im geschlossenen Zustand des Klammerelements 1 aus einem Bereich von 0,25 mm bis 1,0 mm, vorzugsweise 0,85 mm, ausgewählt. In Bereich des Steges 10 ist der Abstand um die Höhe des Steges reduziert, die vorzugsweise 0,15 mm beträgt. In der Ausführung mit den bevorzugten Abmessungen kann das Klammerelement 1 sowohl ein einzelnes Kabel von einem Durchmesser von 1,4 mm wie auch ein Bündel bestehend aus bis zu 8 Kabeln eines Durchmessers von 2,1 mm sicher halten. Es sind auch andere Mischungen an Kabel in Bezug auf Anzahl und deren Durchmesser mit dieser Ausführung haltbar, solange der Querschnitt des Bündels den Querschnitt eines aus 8 Kabeln mit 2,1 mm Durchmesser bestehenden Bündels nicht übersteigt.

Die Dimensionen alternativer Klammerelemente 1 sind in Abhängigkeit der Anzahl der zu haltenden Kabel und der Kabeldurchmesser entsprechend angepasst.

## Patentansprüche

1. Klammerelement zum Halten zumindest eines Gegenstands, insbesondere Kabel, mit einem ersten Teil (2) und einem zum Verschließen des Klammerelements (1) relativ zum ersten Teil (2) bewegbaren zweiten Teil (3), und einem elastischen Element (5), welches an dem ersten (2) oder dem zweiten Teil (3) angeordnet ist, wobei das elastische Element (5) zumindest bereichsweise bogenförmig ausgebildet und mit einem ersten Randbereich (51) an, einem der beiden Teile (2, 3) befestigt ist, wobei die Krümmungsrichtung eines bogenförmigen Bereichs (5a) des elastischen Elements (5) der Krümmungsrichtung eines dem zu haltenden Gegenstand zugewandten bogenförmigen Bereichs (2a, 3a) des anderen Teils (2, 3) entspricht, wobei die Krümmung des bogenförmigen Bereichs (5a) des elastischen Elements (5) in einem geschlossenen Zustand des Klammerelements zu dem bogenförmigen Bereich (2a, 3a) des anderen Teils (2, 3) gleichgerichtet ist, und der Gegenstand zwischen dem elastischen Element (5) und dem anderen Teil (2, 3) durch eine auf den Gegenstand einwirkende Haltekraft haltbar ist, die durch eine von dem Gegenstand verursachte Verformung des elastischen Elements (5) bewirkt ist und der bogenförmige Bereich (5a) des elastischen Elements (5) Erhebungen (53) aufweist, welche parallel und beabstandet zueinander ausgebildet sind, **dadurch gekennzeichnet, dass**
- das elastische Element (5) mit einem dem ersten Randbereich (51) gegenüberliegenden zweiten Randbereich (52) an dem Teil (2, 3), an welchem auch der erste Randbereich (51) angeordnet ist, befestigt ist und
- dass die Erhebungen als Stifte (53) ausgebildet sind, wobei zumindest ein Stift (53) an dem zu haltenden Gegenstand anliegen kann und der Stift (53) von dem Gegenstand verformbar ist, und der Gegenstand zwischen dem elastischen Element (5) und dem anderen Teil (2, 3) durch eine auf den Gegenstand einwirkende Haltekraft haltbar ist, die durch eine von dem Gegenstand verursachte Verformung zumindest eines der Stifte (53) bewirkt ist.

2. Klammerelement nach einem der vorhergehenden Ansprüche, **dadurch gekennzeichnet, dass** sich der bogenförmige Bereich (5a) des elastischen Elements (5) über die gesamte Ausdehnung des bogenförmigen Bereichs (2a, 3a) des anderen Teils (2, 3) erstreckt.

3. Klammerelement nach einem der vorhergehenden Ansprüche, **dadurch gekennzeichnet, dass** das Teil (2, 3), an welchem das elastische Element (5) befestigt ist, zwischen den befestigten Randbereichen (51, 52) einen entgegengesetzt zum bogenförmigen Bereich (5a) des elastischen Elements (5) gekrümmten bogenförmigen Bereich (2a, 3a) aufweist.

4. Klammerelement nach einem der vorhergehenden Ansprüche, **dadurch gekennzeichnet, dass** das erste (2) und das zweite Teil (3) an einer ersten Seite (22, 32) durch eine Rastvorrichtung (8) lösbar verbindbar sind, wobei Rastelemente (81, 82) an den Teilen (2, 3) angeordnet sind.

5. Klammerelement nach einem der vorhergehenden Ansprüche, **dadurch gekennzeichnet, dass** das erste (2) und das zweite Teil (3) an einer zweiten Seite (21, 31) durch ein Filmscharnier (4) verbunden sind.

6. Klammerelement nach einem der vorhergehenden Ansprüche, **dadurch gekennzeichnet, dass** zumindest an einem der beiden Teile (2, 3) ein Befestigungselement (9) zum Befestigen des Klammerelements (1) an einem Objekt ausgebildet ist.

7. Klammerelement nach Anspruch 6, **dadurch gekennzeichnet, dass** das Befestigungselement ein Rastzapfen (9) ist.

8. Klammerelement nach einem der vorhergehenden Ansprüche, **dadurch gekennzeichnet, dass** die Stifte (53) im Haltebereich (I) des Klammerelements (1) im Wesentlichen parallel zum zu haltenden Gegenstand orientiert sind.

9. Klammerelement nach einem der vorhergehenden Ansprüche, **dadurch gekennzeichnet, dass** am bogenförmigen Bereich (5a) des dem elastischen Element (5) gegenüberliegenden Teils (2, 3) ein Steg (10) ausgebildet ist.

10. Klammerelement nach Anspruch 9, **dadurch gekennzeichnet, dass** der Steg (10) durchgängig ausgebildet ist und sich entlang der Krümmung über die gesamte Ausdehnung des bogenförmigen Bereichs (2a, 3a) erstreckt.

11. Klammerelement nach einem der vorhergehenden Ansprüche, **dadurch gekennzeichnet, dass** zumindest zwei nebeneinander angeordnete Gegenstände haltbar sind.

12. Klammerelement nach einem der vorhergehenden Ansprüche, welches einstückig ausgebildet ist.

13. Klammerelement nach einem der vorhergehenden Ansprüche, welches aus Kunststoff ausgebildet ist.

14. Klammerelement nach einem der vorhergehenden Ansprüche, **dadurch gekennzeichnet, dass** das Klammerelement (1) einen Haltebereich (I) mit einer lichten Weite (w) im Bereich von 12,5 und 13,5 mm, vorzugsweise 13,2 mm, und im geschlossenen Zustand des Klammerelements (1) einen nominellen Abstand (h) zwischen der Seite (33) des Teils (3), an dem das elastische Element (5) nicht befestigt ist, und der der Seite (33) zugewandten Seite eines Distanzelements (54) im Bereich von 0,25 mm bis 1,0 mm, vorzugsweise 0,85 mm, aufweist.

## Claims

1. Clip element for holding at least one object, particularly cable, with a first part (2) and a second part (3) movable relative to the first part (2) for closing the clip element (1), and a resilient element (5), which is arranged at the first part (2) or the second part (3), wherein the resilient element (5) is formed to be curved at least in a region and is fastened by a first edge region (51) to one of the two parts (2, 3), wherein the direction of curvature of a curved region (5a) of the resilient element (5) corresponds with the direction of curvature of a curved region (2a, 3a), which faces the object to the held, of the other part (2, 3), wherein the curvature of the curved region (5a) of the resilient element (5) in a closed state of the clip element has the same orientation as the curved region (2a, 3a) of the other part (2, 3), and the object can be held between the resilient element (5) and the other part (2, 3) by a holding force which acts on the object and which is produced by a deformation of the resilient element (5), which is caused by the object, and the curved region (5a) of the resilient element (5) has elevations (53) formed parallelly to and at a spacing from one another,
**characterised in that**
- the resilient element (5) is fastened by a second edge region (52), which is opposite the first edge region (51), to the first part (2, 3) at which the first edge region (51) is also arranged and that
- the elevations are constructed as pins (53), wherein at least one pin (53) can bear against the object to be held and the pin (53) is deformable by the object, and the object can be held between the resilient element (5) and the other part (2, 3) by a holding force which acts on the object and which is produced by a deformation, which is caused by the object, of at least one of the pins (53).

2. Clip element according to the preceding claim, **characterised in that** the curved region (5a) of the resilient element (5) extends over the entire length of the curved region (2a, 3a) of the other part (2, 3).

3. Clip element according to one of the preceding claims, **characterised in that** the part (2, 3) to which the resilient element (5) is fastened has between the fastened edge regions (51, 52) a curved region (2a, 3a) curved in opposite sense to the curved region (5a) of the resilient element (5).

4. Clip element according to any one of the preceding claims, **characterised in that** the first part (2) and the second part (3) are detachably connectible at a first side (22, 32) by a detent device (8), wherein detent elements (81, 82) are arranged at the parts (2, 3).

5. Clip element according to any one of the preceding claims, **characterised in that** the first part (2) and the second part (3) are connected at a second side (21, 31) by a film hinge (4).

6. Clip element according to any one of the preceding claims, **characterised in that** a fastening element (9) for fastening the clip element (1) to an object is formed at at least one of the two parts (2, 3).

7. Clip element according to any claim 6, **characterised in that** the fastening element is a detent pin (9).

8. Clip element according to any one of the preceding claims, **characterised in that** the pins (53) in the holding region (I) of the clip element (1) are oriented substantially parallel to the object to the held.

9. Clip element according to any one of the preceding claims, **characterised in that** a web (10) is formed at the curved region (5a) of the part (2, 3) opposite the resilient element (5).

10. Clip element according to claim 9, **characterised in that** the web (10) is formed to be continuous and extends along the curvature over the entire length of the curved region (2a, 3a).

11. Clip element according to any one of the preceding claims, **characterised in that** at least two objects arranged adjacent to one another can be held.

12. Clip element according to any one of the preceding claims, which is of integral construction.

13. Clip element according to any one of the preceding claims, which is constructed from plastics material.

14. Clip element according to any one of the preceding claims, **characterised in that** the clip element (1) has a holding region (I) with a clear width (w) in the range of 12.5 and 13.5 millimetres, preferably 13.2 millimetres, and in the closed state of the clip element (1) has a nominal spacing (h) between the side (33) of the part (3), at which the resilient element (5) is not fastened, and the side, which faces the side (33), of a spacer element (54) in the range of 0.25 millimetres to 1.0 millimetre, preferably 0.85 millimetres.

## Revendications

1. Agrafe permettant de maintenir au moins un objet, en particulier des câbles, comprenant une première pièce (2) et une deuxième pièce (3) mobile par rapport à la première pièce (2) pour fermer l'agrafe (1), et un élément élastique (5), lequel est disposé sur la première (2) ou la deuxième pièce (3), l'élément élastique (5) étant réalisé au moins par zones en forme d'arc et attaché par une première région de bord (51) à l'une des deux pièces (2, 3), le sens de courbure d'une zone en arc (5a) de l'élément élastique (5) correspondant au sens de courbure d'une zone en arc (2a, 3a), tournée vers l'objet à maintenir, de l'autre pièce (2, 3), la courbure de la zone en arc (5a) de l'élément élastique (5), à l'état fermé de l'agrafe, étant dirigée dans le même sens que la zone en arc (2a, 3a) de l'autre pièce (2, 3), et l'objet entre l'élément élastique (5) et l'autre pièce (2, 3) pouvant être maintenu par une force de retenue agissant sur l'objet, qui est induite par une déformation de l'élément élastique (5) provoquée par l'objet, et la zone en arc (5a) de l'élément élastique (5) présentant des protubérances (53), lesquelles sont parallèles et espacées les unes des autres,
**caractérisée en ce que**
- l'élément élastique (5) est attaché par une deuxième région de bord (52), opposée à la première zone de bord (51), à la pièce (2, 3), sur laquelle est disposée aussi la première région de bord (51), et **en ce que**
- les protubérances sont réalisées sous forme de tiges (53), au moins une tige (53) pouvant s'appliquer contre l'objet à maintenir et la tige (53) étant susceptible d'être déformée par l'objet, et l'objet entre l'élément élastique (5) et l'autre pièce (2, 3) pouvant être maintenu par une force de retenue agissant sur l'objet, qui est induite par une déformation d'au moins l'une des tiges (53) provoquée par l'objet.

2. Agrafe selon l'une des revendications précédentes, **caractérisée en ce que** la zone en arc (5a) de l'élément élastique (5) s'étend sur toute l'étendue de la zone en arc (2a, 3a) de l'autre pièce (2, 3).

3. Agrafe selon l'une des revendications précédentes, **caractérisée en ce que** la pièce (2, 3), à laquelle est attaché l'élément élastique (5), présente entre les régions de bords (51, 52) attachées une zone en arc (2a, 3a) dont la courbure est inversée par rapport à la zone en arc (5a) de l'élément élastique (5).

4. Agrafe selon l'une des revendications précédentes, **caractérisée en ce que** la première (2) et la deuxième pièce (3) peuvent être reliées de manière amovible, sur un premier côté (22, 32), par un dispositif d'encliquetage (8), étant précisé que des éléments d'encliquetage (81, 82) sont disposés sur les pièces (2, 3).

5. Agrafe selon l'une des revendications précédentes, **caractérisée en ce que** la première (2) et la deuxième pièce (3) sont reliées, sur un deuxième côté (21, 31), par une charnière en film (4).

6. Agrafe selon l'une des revendications précédentes, **caractérisée en ce qu'**un élément de fixation (9), destiné à fixer l'agrafe (1) sur un objet, est réalisé sur au moins l'une des deux pièces (2, 3).

7. Agrafe selon la revendication 6, **caractérisée en ce que** ledit élément de fixation est un tenon d'encliquetage (9).

8. Agrafe selon l'une des revendications précédentes, **caractérisée en ce que** les tiges (53) sont orientées dans la zone de retenue (I) de l'agrafe (1) de façon sensiblement parallèle à l'objet à maintenir.

9. Agrafe selon l'une des revendications précédentes, **caractérisée en ce qu'**une nervure (10) est réalisée sur la zone en arc (5a) de la pièce (2, 3) opposée à l'élément élastique (5).

10. Agrafe selon la revendication 9, **caractérisée en ce que** la nervure (10) est réalisée de façon continue et s'étend le long de la courbure sur toute l'étendue de la zone en arc (2a, 3a).

11. Agrafe selon l'une des revendications précédentes, **caractérisée en ce qu'**au moins deux objets juxtaposés peuvent être maintenus.

12. Agrafe selon l'une des revendications précédentes, laquelle est réalisée en une seule pièce.

13. Agrafe selon l'une des revendications précédentes, laquelle est réalisée en matière plastique.

14. Agrafe selon l'une des revendications précédentes, **caractérisée en ce que** ladite agrafe (1) présente une zone de retenue (I) ayant une largeur intérieure (w) comprise dans la plage de 12,5 à 13,5 mm, de préférence de 13,2 mm, et, à l'état fermé de l'agrafe (1), une distance nominale (h) entre le côté (33) de la pièce (3), à laquelle l'élément élastique (5) n'est pas attaché, et le côté, tourné vers le côté (33), d'un élément d'écartement (54) comprise dans la plage de 0,25 mm à 1,0 mm, de préférence de 0,85 mm.
